# EUROPEAN PATENT SPECIFICATION

(11) **EP 2 353 401 B1**
(45) Date of publication and mention of the grant of the patent: **16.01.2013**
(21) Application number: 11152631.5
(22) Date of filing: 29.01.2011
(51) Int. Cl.: A23G 1/04, A23G 3/02

(54) **Pouring machine**
Gießmaschine
Machine de coulée

(30) Priority: 29.01.2010 IT TO20100063
(43) Date of publication of application: 10.08.2011
(73) Proprietor: CARLE & MONTANARI - OPM S.p.A., Rozzano (MI) (IT)
(72) Inventor: Tomadon, Massimo, 12040, Sommariva Perno (IT); Martini, Fabio, 12062, Cherasco (IT)
(74) Representative: Jorio, Paolo

(56) References cited:
- DE-A1- 10 143 361
- DE-A1- 10 143 392
- DE-A1-102004 041 365
- DE-A1-102005 004 785
- DE-A1-102008 001 371

## Description

The present invention relates to a pouring machine for pouring a product, e.g. chocolate, into molds moving along a conveyor line.

Pouring machines are known comprising a carriage powered to perform a back and forth tracking movement parallel to the mold conveyor line, and which supports a hopper, and a metering assembly or so-called 'piston block'. The hopper serves as a tank for the liquid chocolate, is equipped with a stirring device to stir the chocolate inside it, and is located over the metering assembly, which comprises a rotary dispenser or 'valve', and a row of horizontal pistons which move back and forth in time with rotation of the dispenser. The pistons move in one direction to draw in the chocolate, and in the opposite direction to force the chocolate out through a number of calibrated nozzles formed in a so-called pour plate fixed beneath a pour assembly and over the mold conveyor line. Alternatively, instead of the pour plate, the chocolate injection nozzles are defined by a rotary-blade device for strip- as opposed to spot-pouring the chocolate.

To make product changes and/or carry out maintenance and/or cleaning work, the hopper, pour plate, and pour assembly can be changed independently. More specifically, the hopper, together with the stirring device, and the metering assembly must be removed one after the other off the carriage, and any connections between the parts disconnected manually.

The above known solution is far from satisfactory, especially when making production changes and pouring different products, on account of the relatively time-consuming work involved in changing the pour assembly and the hopper.

It is an object of the present invention to provide a pouring machine designed to provide a simple, low-cost solution to the above problem.

According to the present invention, there is provided a pouring machine as claimed in Claim 1.

A non-limiting embodiment of the present invention will be described by way of example with reference to the accompanying drawings, in which :
Figure 1 shows a partial view in perspective of a first preferred embodiment of the pouring machine according to the present invention;
Figure 2 shows a larger-scale, front view, with parts removed for clarity, of the Figure 1 pouring machine;
Figure 3 shows, with parts removed for clarity, a larger-scale detail of Figure 1, illustrating removal of a module from the rest of the pouring machine;
Figure 4 shows another larger-scale detail of the pouring machine;
Figure 5 shows a partly exploded, partial view in perspective of a second preferred embodiment of the pouring machine according to the present invention;
Figures 6 to 8 show respective larger-scale details, with parts removed for clarity, of the Figure 5 pouring machine.

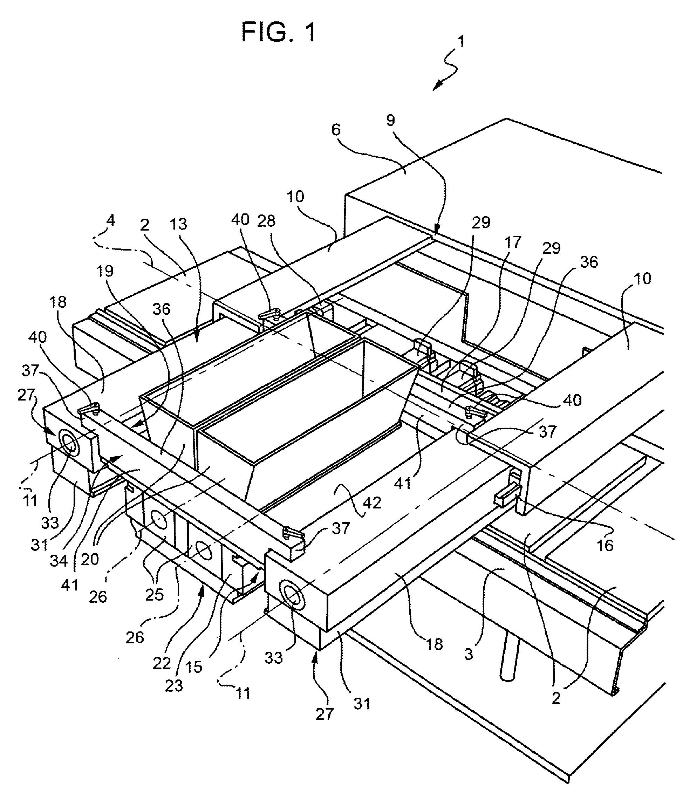

Number 1 in Figure 1 indicates as a whole a pouring machine (only shown partly) for pouring a product, e.g. chocolate, into molds 2 fed by a conveyor 3 in a straight horizontal direction 4. Machine 1 comprises a bed 6 alongside conveyor 3; and a structure 9 (only shown partly) fitted to bed 6 and positioned over conveyor 3 and molds 2. Structure 9 comprises two substantially L-section arms or brackets 10 spaced apart and projecting outwards from bed 6 along respective horizontal axes 11 perpendicular to direction 4.

In an embodiment not shown, structure 9 defines a carriage, which is run back and forth, parallel to direction 4, by a drive (not shown) housed in bed 6, to follow molds 2 and pour the product without stopping conveyor 3. In the simpler embodiment shown, structure 9 does not follow molds 2, and conveyor 3 moves in steps.

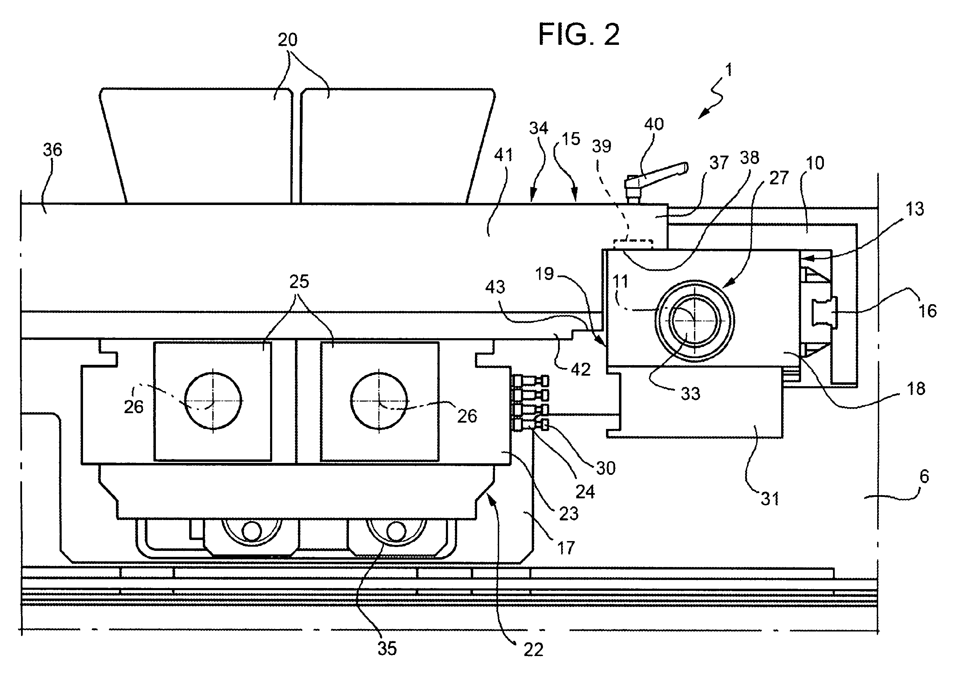

With reference to Figures 1 and 2, structure 9 comprises a frame 13, which supports an interchangeable module 15 and is fitted to arms 10 on runners 16 to move, parallel to axes 11, between a withdrawn position (not shown), in which module 15 is positioned over the conveyor of molds 2 to pour the product, and an extracted position, in which frame 13 projects from arms 10, beyond conveyor 3, for easy removal and replacement of module 15.

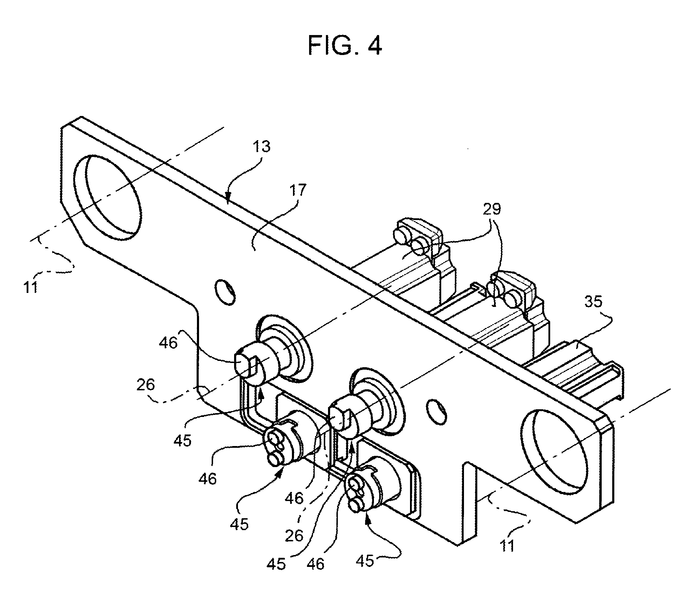

Frame 13 comprises a vertical rear plate 17 (Figure 4); and two arms or brackets 18 projecting from plate 17 along axes 11 and housed partly inside arms 10.

Arms 18 and plate 17 define the sides and rear of a seat 19 engaged by part of module 15. Module 15 comprises two tanks or hoppers 20 containing the product for pouring, and each equipped with a stirring device (not shown) powered by a motor (not shown) fixed to plate 17, to stir the product inside tank 20. With reference to Figure 2, module 15 also comprises a pour assembly 22, which is located beneath tanks 20, communicates with tanks 20 in a manner not shown, and comprises : a supporting block 23; two rows of pistons 24 on opposite sides of block 23; and two dispensers or valves 25 housed in respective seats in block 23 and defining respective members rotating about axes 26 parallel to axes 11.

Pistons 24 are parallel to direction 4, and are operated by two actuating devices 27, comprising respective motors 28 (only one shown partly in Figure 1) fixed to plate 17, to perform an intake stroke, outwards of block 23, to draw product from tanks 20 into block 23, and a compression stroke, inwards of block 23, to force the intake out through nozzles defined by a pour plate (not shown) forming part of module 15 and located in a fixed position beneath block 23. Dispensers 25 are powered by respective motors 29, fixed to plate 17, to rotate between a first position, in which they receive the product drawn by pistons 24, and a second position, in which they allow downflow of the product compressed by pistons 24, i.e. onto the pour plate. In other words, motors 28 and 29 are synchronized so that each row of pistons 24 performs an intake stroke when the corresponding dispenser 25 is in the first position, and a compression stroke when the corresponding dispenser 25 is in the second position.

The outer ends 30 of pistons 24 in each row are normally fixed releasably to a respective slide 31, e.g. by a bracket (not shown) which comprises a comb inserted between ends 30, and is fixed by screws to slide 31.

Figure 2 shows ends 30 detached from slide 31, i.e. with the bracket removed and pistons 24 moved manually inwards of block 23.

Slides 31 are fitted on runners (not shown) to arms 18 to move parallel to direction 4. Devices 27 comprise respective rack-and-sprocket type transmissions (not shown) which move respective slides 31 back and forth, and are housed in arms 18, with the racks fixed to the top surfaces of slides 31, and the sprockets fixed to shafts 33 coaxial with and powered by respective motors 28 to rotate in opposite directions.

Module 15 also comprises a frame 34, which supports assembly 22, tanks 20, the stirring devices, the pour plate, and any connections between assembly 22 and tanks 20. Alternatively, a rotary-blade device may be substituted for the pour plate, to pour the product in strips as opposed to spots, by regulating outflow of the product by means of blades rotated by motors 35 (Figure 4) fixed to plate 17.

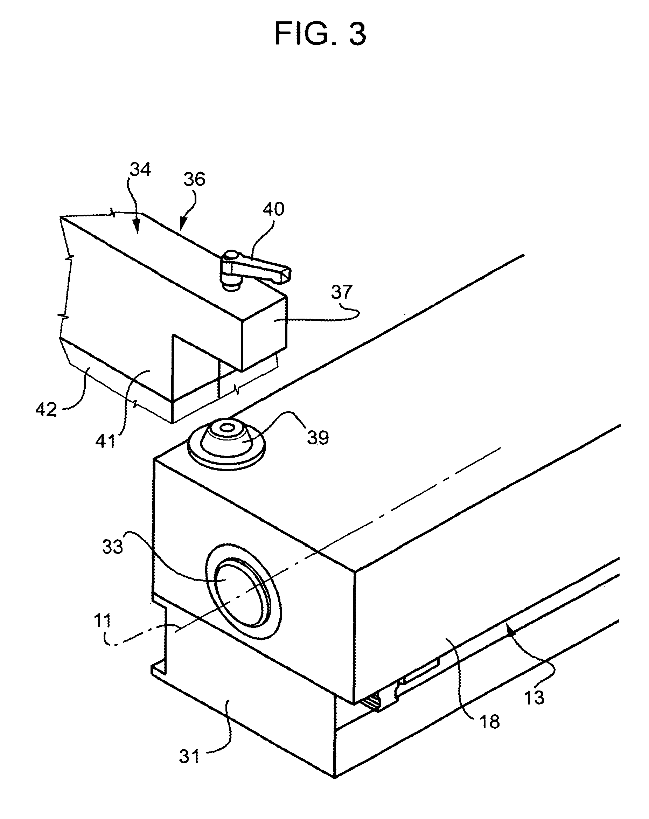

Frame 34 comprises two horizontal cross members 36 perpendicular to arms 18, and the ends of which define respective appendixes or wings 37 which rest on respective horizontal top surfaces 38 of arms 18. Surfaces 38 project outwards of arms 10 even when frame 13 is in the withdrawn position, and are fitted with respective locating pins 39 (Figure 3), which project upwards from surfaces 38 and engage respective seats (not shown) in the bottom faces of appendixes 37 to define the assembly position of frame 34 to frame 13. Alternatively, pins 39 may be fitted to frame 34, and the corresponding seats formed in frame 13.

Cross members 36 comprise respective bottom portions 41 interposed between arms 18 and substantially the same size as the distance between arms 18, so as to centre module 15, parallel to direction 4, with respect to frame 13; and screw connecting devices 40 are provided to lock cross members 36 releasably to arms 18.

Frame 34 also comprises a horizontal plate 42 which is located over block 23, surrounds a bottom portion of tanks 20, is fixed to portions 41 and/or block 23 in a manner not described in detail, and comprises two lateral end portions 43 (Figure 2) facing pistons 24 underneath.

With reference to Figure 4, dispensers 25, the stirring devices and the rotary blades (if any) are connected releasably to the respective motors, e.g. by face clutches 45. In Figure 4, which shows motors 29 and 35, clutch 45 comprises at least one face dog 46, which is integral with the drive shaft, is eccentric with respect to the axis of the drive shaft, and engages a seat (not shown) in a driven shaft on module 15 to transmit rotation from the motor to module 15. Alternatively, dog 46 is fixed with respect to the driven shaft, and the corresponding seat is formed in the face of the drive shaft.

Module 15 is removed from the rest of machine 1 by releasing devices 40 and detaching ends 30 of pistons 24 from slides 31. As stated, pistons 24 are then pushed manually inwards of block 23 to form a gap between ends 30 and slides 31.

At the same time, clutches 45 are released by withdrawing the driven shafts on module 15 axially from the respective drive shafts, or withdrawing the motors axially from the respective driven shafts.

At this point, module 15 is connected to the rest of machine 1 solely by arms 18 supporting it from underneath, and can therefore be simply lifted off frame 13 using, for example, a crane, a robot, or an ordinary fork-lift truck equipped with a support (not shown) designed to engage portions 43 and support module 15 from underneath.

In an alternative embodiment, the seats of clutches 45 are in the form of respective radially-open grooves, so dog 46 and the groove of each clutch 45 can be released radially, with no relative axial movement of the drive and driven shafts required. In which case, a positioning device is provided to set the grooves of clutches 45 to a vertical reference position, and is preferably defined by a control for setting all the drive shafts of dispensers 25, the stirring devices, and the rotary blades (if any) automatically to the reference position. To do this, the motors of dispensers 25, the stirring devices, and the rotary blades (if any) are position-controlled electric motors, preferably brushless motors with absolute encoders. This embodiment allows module 15 to be lifted/lowered without altering the relative axial positions of the drive and driven shafts.

To reassemble module 15 onto frame 13, an embodiment not shown comprises a vertical guide device for guiding the downward movement of frame 34 onto frame 13.

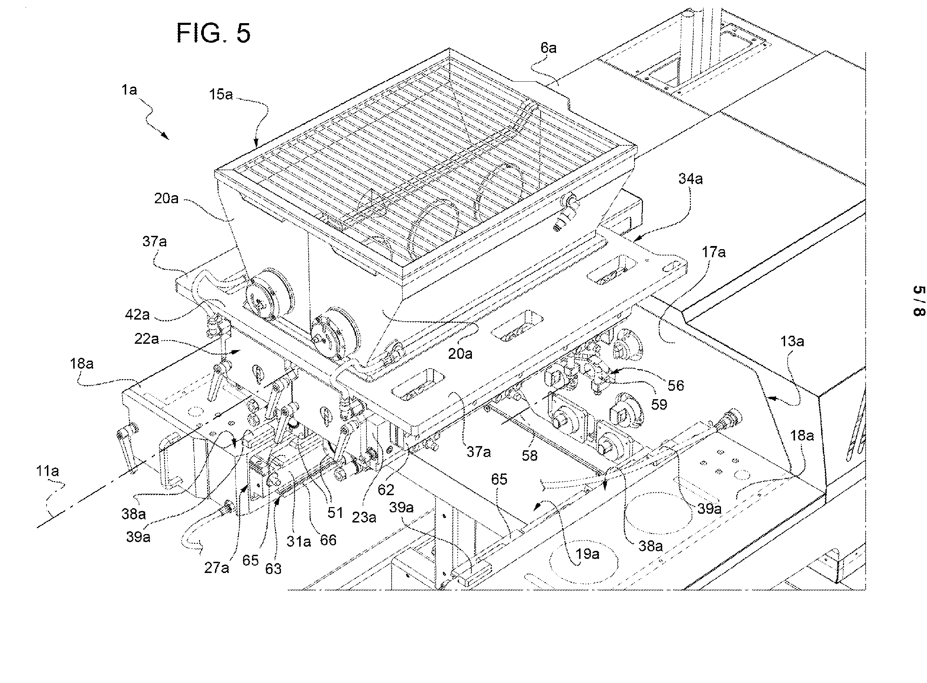

Figures 5 to 8 show a pouring machine 1a, the component parts of which are indicated, wherever possible, using the same reference numbers, followed by the letter 'a', as for pouring machine 1. Unlike pouring machine 1, arms 10 are eliminated, so frame 13a is fixed in a direction parallel to axes 11a, but arms 18a are movable vertically to move the product nozzles closer to the molds at the pouring stage. As in pouring machine 1, the nozzles of module 15a are defined by a pour plate (not shown) or by rotary-blade devices 51.

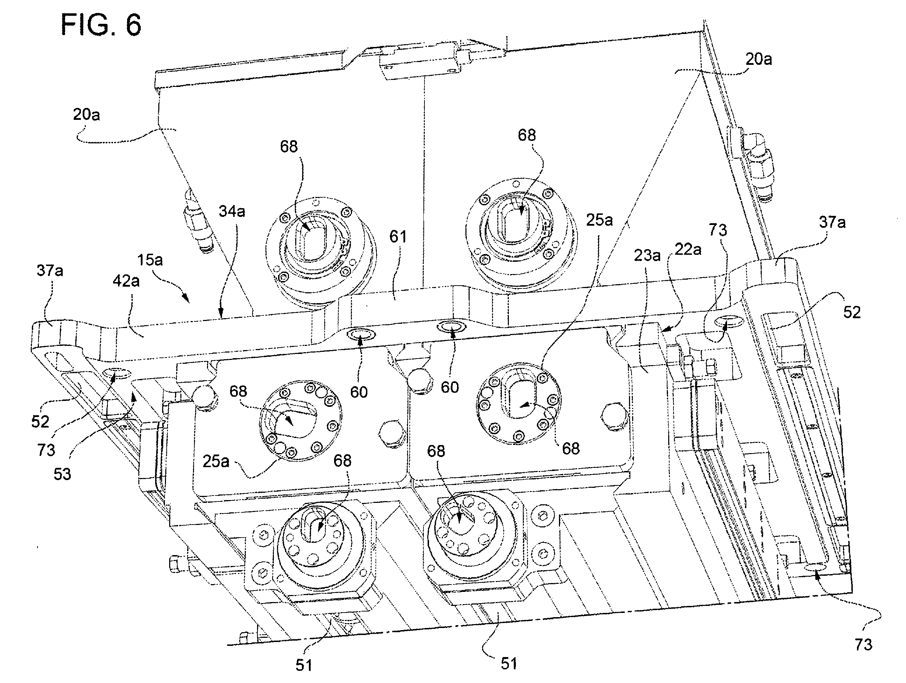

Cross members 36 and devices 40 are also eliminated. The lateral ends of plate 42a define respective appendixes or wings 37a, which rest on respective horizontal top surfaces 38a of arms 18a. Pins 39 are replaced with runners 39a parallel to axes 11a (Figure 5), and appendixes 37a have respective slide portions 52 (Figure 6) which engage and slide along runners 39a to guide module 15a, along arms 18a and parallel to axes 11a, to and from plate 17a. More specifically, runners 39a are defined by blocks projecting upwards from surfaces 38a, and slide portions 52 are defined by respective grooves on the bottom face 53 of plate 42a.

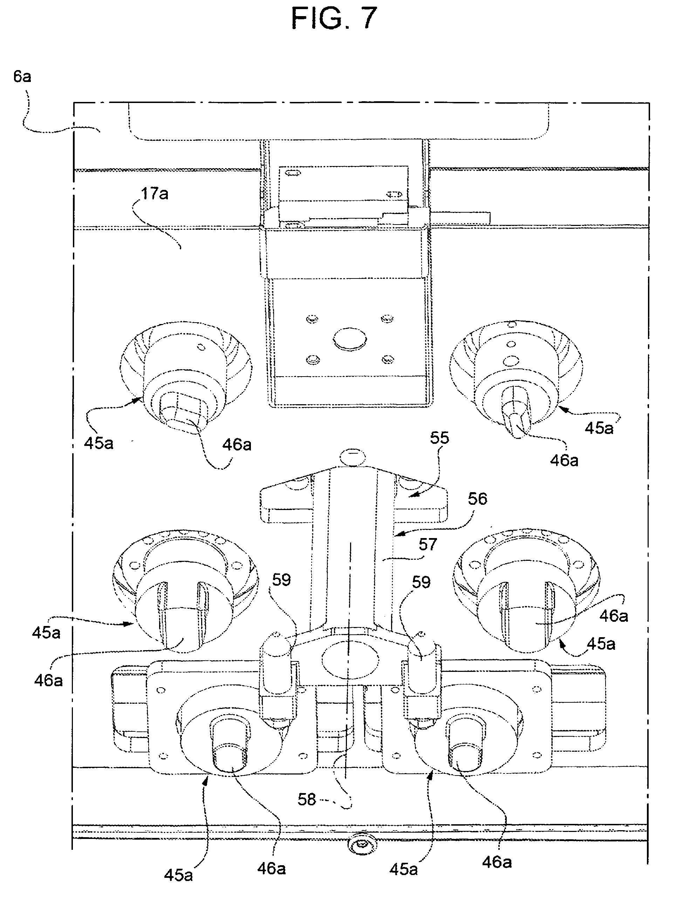

An actuator 56 (shown partly in Figure 7) provides for moving module 15a along arms 18a, and is preferably a linear actuator, e.g. a pneumatic cylinder, comprising a cylinder fixed behind plate 17a; and a rod 57 which extends through an opening 55 in plate 17a, along an axis 58 parallel to axes 11a. The end of rod 57 is housed in seat 19a, and is fitted with two vertical pins 59 to engage frame 34a of module 15a. Pins 59 are fixed with respect to rod 57, extend upwards, and engage corresponding vertical holes 60 (Figure 6) in a rear appendix 61 of plate 42a. In normal operating conditions, actuator 56 therefore holds module 15a in a fixed horizontal position, but leaves it free to move upwards.

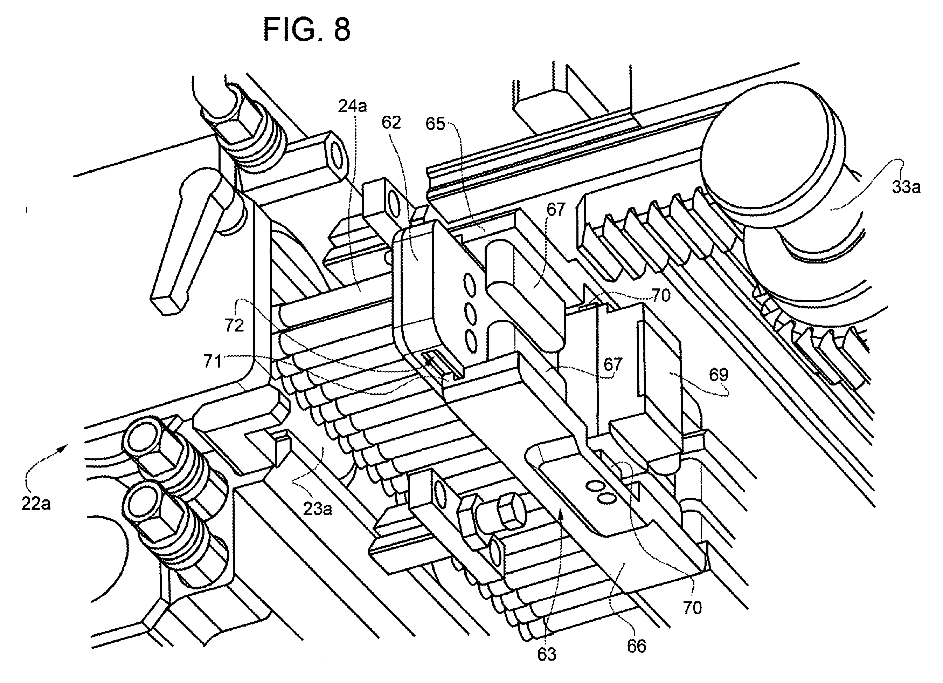

With reference to Figure 8, on each side of assembly 22a, the ends of pistons 24a are fixed to an anchoring plate 62 fitted releasably to corresponding slide 31a by one or more clamps 63 preferably powered to open/close to release/clamp pistons 24a automatically. More specifically, each clamp 63 comprises a top jaw 65 and a bottom jaw 66, respective portions 67 of which slide inside vertical guide seats (not shown) fixed with respect to slide 31a. Jaws 65, 66 are preferably operated by an actuator 69 having two opposed rods 70 fixed to jaws 65, 66 and operated to move in opposite directions. Jaws 65, 66 terminate with respective dogs 71 facing each other and releasably engaging corresponding seats 72 in anchoring plates 62.

To release automatically, pistons 24a are first moved inside block 23a by actuating devices 27a, and then released from slides 31a by actuators 69 releasing clamps 63; and, finally, slides 31a are withdrawn by actuating devices 27a to clear the space between arms 18a and anchoring plates 62.

Again automatically, actuator 56 then pushes plate 42a along runners 39a on arms 18a to detach module 15a from plate 17a. The rear ends of the driven shafts on module 15a have respective axial seats 68 (Figure 6) which, as module 15a is detached, withdraw axially from respective dogs 46a to simultaneously release clutches 45a.

Once detached from plate 17a, module 15a can be raised by arms 18a and removed. This is preferably done using a cradle (not shown) having a number of uprights with top ends designed to engage respective locating seats 73 in the bottom face 53 of plate 42s. The cradle is positioned on the conveyor under module 15a, and arms 18a are lowered (as when pouring the product). As arms 18a move down, the cradle uprights engage corresponding seats 73, and plate 42a comes to rest on the uprights. As arms 18a continue moving down, module 15a, being supported by the uprights, remains stationary, runners 39a withdraw vertically from corresponding slide portions 52, and pins 59 withdraw vertically from corresponding holes 60. Module 15a is by now detached completely from arms 18a and supported solely by the cradle, which can be moved easily, for example, by a fork-lift truck.

Once removed from arms 18, 18a, module 15, 15a can be replaced quickly and easily with a similar module, and transferred to a dedicated station, where it can be serviced, dismantled, cleaned, etc. at ease, while production continues on pouring machine 1, 1a. Downtime is brief, by module 15, 15a being removed quickly and easily in one piece from frame 13, 13a, and by tanks 20, 20a, with the stirring devices, and assembly 22, 22a, with the nozzles underneath, being replaced in one operation. In the case of pouring machine 1a, module 15a is removed relatively quickly by simply releasing pistons 24a, detaching module 15a, and lowering arms 18a, and is reassembled performing the same operations in reverse. More specifically, dogs 46a are bevelled to assist axial insertion into corresponding seats 68.

The fact that frame 34, 34a simply rests on surfaces 38, 38a of arms 18, 18a eliminates the need for complicated systems connecting frames 13, 13a and 34, 34a. In pouring machine 1, extraction of frame 13 with respect to the withdrawn position simplifies removal and reassembly of module 15 by distancing frames 13 and 34 from conveyor 3.

The motors are housed in bed 6, 6a, behind plate 17, 17a, to avoid interfering with conveyor 3 and/or molds 2.

When assembling a new module 15a on arms 18a of pouring machine 1a, operation of actuator 56 - after positioning the shafts on module 15a and frame 13a in a predetermined angular reference position - automatically engages clutches 45a axially, simultaneously, and accurately, with no jamming or tilting of module 15a. Erroneous right-for-left assembly of dispensers 25a can be prevented using differently shaped and/or differently located right- and left-side dogs 46a. And, by detaching module 15a from plate 17a, module 15a is removed and reassembled without interfering with any mechanical parts, sensors, or other parts fitted to plate 17a, over seat 19a.

Moreover, as opposed to assigning a pre-assembly reference position, the correct angular position of dogs 46a with respect to corresponding seats 68 may be determined automatically by running the motors slowly, as module 15a moves towards plate 17a, until clutches 45a engage axially one after the other.

Clearly, changes may be made to pouring machine 1, 1a as described herein without, however, departing from the scope of the present invention as defined in the accompanying Claims.

In particular, the clutches connecting the driven shafts on module 15, 15a to the motors on frame 13, 13a may differ from those described by way of example, while still being designed for fast or automatic release when removing module 15, 15a.

Module 15, 15a may comprise a different number of tanks 20, 20a and/or dispensers 25, 25a; and/or block 23, 23a and/or tanks 20, 20a may be fixed releasably to frame 34, 34a for individual replacement.

Plate 42a may be formed in one piece with block 23a, and frame 34a therefore at least partly integrated in block 23a.

And, finally, the product poured may be other than chocolate referred to by way of example.

## Claims

1. A pouring machine (1; 1a) comprising :
- at least one tank (20; 20a) containing a product for pouring, and equipped with a stirring device to stir the product inside it;
- a pour assembly (22; 22a) located beneath said tank (20; 20a) and comprising :
a) at least one row of horizontal pistons (24), which perform an intake stroke to draw product from said tank, and a compression stroke to compress the product drawn in; and
b) at least one dispenser (25; 25a) which rotates between a first position, to receive the product drawn in by said pistons (24), and a second position allowing downflow of the product compressed by said pistons (24);
- a motor (29; 29a) for rotating said dispenser (25; 25a);
- actuating means (27; 27a) for moving said pistons (24) back and forth; said actuating means (27; 27a) being connected releasably to said pistons (24); and
- a frame (13; 13a) supporting said motor (29; 29a) and comprising two arms (18; 18a) projecting along respective parallel horizontal axes (11; 11a) and fitted with said actuating means (27; 27a);
the pouring machine being **characterized in that** said tank (20; 20a) and said pour assembly (22; 22a) form part of a module (15; 15a) removable in one piece from said frame (13; 13a); the module (15; 15a) being connected releasably to said motor (29; 29a), and comprising a further frame (34; 34a) having two opposite lateral appendixes (37; 37a) which rest in fixed positions on respective top surfaces (38; 38a) of said arms (18; 18a).

2. A pouring machine as claimed in Claim 1, **characterized by** comprising a face clutch (45; 45a) for connecting said motor (29; 29a) to a driven shaft rotating said dispenser (25; 25a).

3. A pouring machine as claimed in Claim 2, **characterized in that** said face clutch (45a) is engageable/releasable by translating said module (15a) in a direction (58) parallel to said horizontal axes (11a).

4. A pouring machine as claimed in Claim 2 or 3, **characterized in that** said frame (13; 13a) comprises a vertical plate (17; 17a); said motor (29; 29a) being located behind said vertical plate (17; 17a); and said face clutch (45; 45a) being located in front of said vertical plate (17; 17a).

5. A pouring machine as claimed in Claim 3, **characterized in that** said arms (18a) have respective runners (39a) parallel to said horizontal axes (11a); and said lateral appendixes (37a) have respective slide portions (52) which engage and slide along said runners (39a).

6. A pouring machine as claimed in Claim 3 or 5, **characterized by** comprising an actuator (56) for sliding said module (15a) in said direction (58) on said top surfaces (38a).

7. A pouring machine as claimed in Claim 6, **characterized in that** said actuator (56) comprises :
- a rod (57) movable in said direction (58); and
- at least one vertical pin (59), which is fixed to the end of said rod (57), projects upwards, and engages a corresponding hole (60) formed in a rear appendix (61) of said further frame (34a).

8. A pouring machine as claimed in Claim 7, **characterized in that** said lateral appendixes (37a) and/or said rear appendix (61) form part of a horizontal plate (42a) interposed between said tank (20a) and said pour assembly (22a).

9. A pouring machine as claimed in Claim 8, **characterized in that** said lateral appendixes (37a) and/or said rear appendix (61) form part of a horizontal plate (42a) formed in one piece with a block (23a) of said pour assembly (22a).

10. A pouring machine as claimed in any one of the foregoing Claims, **characterized in that** said actuating means (27; 27a) comprise :
- at least one slide (31; 31a) fitted to a said arm (18; 18a) to slide in a horizontal direction perpendicular to said horizontal axes (11; 11a);
- retaining means (63) which fix said slide (31; 31a) releasably to ends of said pistons (24a); and
- transmission means housed in said arm (18; 18a) and for transmitting motion from a further motor (28) to said slide (31; 31a).

11. A pouring machine as claimed in Claim 10, **characterized in that** said retaining means (63) are fitted to said slide (31a) and powered to engage/release said pistons (24a).

12. A pouring machine as claimed in Claim 11, **characterized in that** the ends of said pistons (24a) are fixed to an anchoring plate (62); said retaining means comprising at least one jaw (65, 66) movable to engage/release said anchoring plate (62).

13. A method of removing a module (15a) from a pouring machine as claimed in any one of the foregoing Claims, the method comprising the steps of :
- disconnecting said pistons (24a) from said actuating means (27a);
- moving said module (15a) along said top surfaces (38a) in a direction (58) parallel to said horizontal axes (11a);
- placing a cradle beneath said module (15a);
- lowering said arms (18a) until said further frame (34a) comes to rest on said cradle and detaches from said arms (18a); and
- removing said cradle, with the module (15a) resting on it.

## Patentansprüche

1. Gießmaschine (1; 1a), mit:
- mindestens einem Tank (20; 20a), der ein Produkt zum Gießen enthält und mit einer Rührvorrichtung ausgestattet ist, um das Produkt darin zu rühren;
- einer Gießanordnung (22; 22a), die unterhalb des Tanks (20; 20a) lokalisiert ist und umfasst:
a) mindestens eine Reihe von horizontalen Kolben (24), die einen Ansaugtakt, um Produkt von dem Tank zu ziehen, und einen Verdichtungstakt, um das das eingezogene Produkt zu verdichten, durchführen; und
b) mindestens eine Ausgabevorrichtung (25; 25a), die sich zwischen einer ersten Position, um das durch die die Kolben (24) eingezogene Produkt aufzunehmen, und einer zweiten Position, die ein Abfließen des durch die Kolben (24) komprimierten Produkts ermöglicht, dreht;
- einem Motor (29; 29a) zum Drehen der Ausgabevorrichtung (25; 25a);
- Betätigungsmitteln (27; 27a), um die Kolben (24) hin und her zu bewegen; wobei die Betätigungsmittel (27; 27a) lösbar mit den Kolben (24) verbunden sind; und
- einem Rahmen (13; 13a), der den Motor (29; 29a) trägt und zwei Arme (18; 18a) umfasst, die entlang jeweiliger paralleler horizontaler Achsen (11; 11a) vorstehen und mit den Betätigungsmitteln (27; 27a) ausgerüstet sind;
wobei die Gießmaschine **dadurch gekennzeichnet ist, dass** der Tank (20; 20a) und die Gießanordnung (22; 22a) Teil eines Moduls (15; 15a) bilden, das in einem Stück von dem Rahmen (13; 13a) entfernbar ist; wobei das Modul (15; 15a) lösbar mit dem Motor (29; 29a) verbunden ist, und mit einem weiteren Rahmen (34; 34a), der zwei entgegengesetzte laterale Fortsätze (37; 37a) aufweist, die in festen Positionen auf jeweiligen oberen Oberflächen (38; 38a) der Arme (18; 18a) ruhen.

2. Gießmaschine gemäß Anspruch 1, **gekennzeichnet durch** Umfassen einer Flächenkupplung (45; 45a) zum Verbinden des Motors (29; 29a) mit einer getriebenen Welle, die die Ausgabevorrichtung (25; 25a) dreht.

3. Gießmaschine gemäß Anspruch 2, **dadurch gekennzeichnet, dass** die Flächenkupplung (45a) durch Verschieben des Moduls (15a) in einer Richtung (58) parallel zu den horizontalen Achsen (11a) in Eingriff bringbar/lösbar ist.

4. Gießmaschine gemäß Anspruch 2 oder 3, **dadurch gekennzeichnet, dass** der Rahmen (13; 13a) eine vertikale Platte (17; 17a) umfasst; der Motor (29; 29a) hinter der vertikalen Platte (17; 17a) lokalisiert ist; und die Flächenkupplung (45; 45a) vor der vertikalen Platte (17; 17a) lokalisiert ist.

5. Gießmaschine gemäß Anspruch 3, **dadurch gekennzeichnet, dass** die Arme (18a) jeweilige Laufschienen (39a) ausweisen, die zu den horizontalen Achsen (11a) parallel sind; und die lateralen Fortsätze (37a) jeweilige Gleitabschnitte (52) aufweisen, die die Laufschienen (39a) in Eingriff bringen und entlang derselben gleiten.

6. Gießmaschine gemäß Anspruch 3 oder 5, **gekennzeichnet durch** Umfassen eines Betätigungsvorrichtung (56) zum Verschieben des Moduls (15a) in der Richtung (58) auf den oberen Oberflächen (38a).

7. Gießmaschine gemäß Anspruch 6, **dadurch gekennzeichnet, dass** die Betätigungsvorrichtung (56) umfasst:
- einen Stab (57), der in der Richtung (58) bewegbar ist; und
- mindestens einen vertikalen Stift (59), der an dem Ende des Stabs (57) befestigt ist, nach oben vorsteht, und ein entsprechendes Loch (60) in Eingriff bringt, das in einem hinteren Fortsatz (61) des weiteren Rahmens (34a) ausgebildet ist.

8. Gießmaschine gemäß Anspruch 7, **dadurch gekennzeichnet, dass** die lateralen Fortsätze (37a) und/oder der hintere Fortsatz (61) Teil einer horizontalen Platte (42a) bilden, die zwischen dem Tank (20a) und der Gießanordnung (22a) angeordnet ist.

9. Gießmaschine gemäß Anspruch 8, **dadurch gekennzeichnet, dass** die lateralen Fortsätze (37a) und/oder der hintere Fortsatz (61) Teil einer horizontalen Platte (42a) bilden, die in einem Stück mit einem Block (23a) der Gießanordnung (22a) gebildet ist.

10. Gießmaschine gemäß einem der vorhergehenden Ansprüche, **dadurch gekennzeichnet, dass** die Betätigungsmittel (27; 27a) umfassen:
- mindestens ein Gleitstück (31; 31a), das an einem der Arme (18; 18a) befestigt ist, um in einer horizontal Richtung senkrecht zu den horizontalen Achsen (11; 11 a) zu gleiten;
- Festhaltemittel (63), die das Gleitstück (31; 31a) lösbar an Enden der Kolben (24a) befestigen; und
- Übertragungsmittel, die in dem Arm (18; 18a) untergebracht sind und Bewegung von einem weiteren Motor (28) zu dem Gleitstück (31; 3 1 a) übertragen.

11. Gießmaschine gemäß Anspruch 10, **dadurch gekennzeichnet, dass** die Festhaltemittel (63) an dem Gleitstück (31a) befestigt sind und angetrieben werden, um die Kolben (24a) in Eingriff zu bringen und zu lösen.

12. Gießmaschine gemäß Anspruch 11, **dadurch gekennzeichnet, dass** die Enden der Kolben (24a) an einer Verankerungsplatte (62) befestigt sind; wobei die Festhaltemittel mindestens eine Backe (65, 66) umfassen, die bewegbar ist, um die Verankerungsplatte (62) in Eingriff zu bringen/zu lösen.

13. Verfahren zum Entfernen eines Moduls (15a) von einer Gießmaschine gemäß einem der vorhergehenden Ansprüche, wobei das Verfahren folgende Schritte umfasst:
- Trennen der Kolben (24a) von den Betätigungsmitteln (27a);
- Bewegen des Moduls (15a) entlang der oberen Oberflächen (38a) in einer Richtung (58) parallel zu den horizontalen Achsen (11a);
- Anordnen eines Gestells unterhalb des Moduls (15a);
- Absenken der Arme (18a) bis der weitere Rahmen (34a) auf dem Gestell aufliegt und sich von den Armen (18a) löst; und
- Entfernen des Gestells, wobei das Modul (15a) auf ihm aufliegt.

## Revendications

1. Machine de coulée (1 ; 1a) comprenant :
- au moins un réservoir (20 ; 20a) contenant un produit à couler, et équipé d'un dispositif mélangeur pour mélanger le produit qu'il contient ;
- un ensemble de coulée (22 ; 22a) situé en dessous dudit réservoir (20 ; 20a) et comprenant :
a) au moins une rangée de pistons horizontaux (24), qui effectuent une course d'aspiration pour soutirer le produit depuis ledit réservoir, et une course de compression pour comprimer le produit soutiré ; et
b) au moins un distributeur (25 ; 25a) qui tourne entre une première position, pour recevoir le produit soutiré par lesdits pistons (24), et une deuxième position permettant l'écoulement vers le bas du produit comprimé par lesdits pistons (24) ;
- un moteur (29 ; 29a) pour faire tourner ledit distributeur (25 ; 25a) ;
- des moyens d'actionnement (27 ; 27a) pour déplacer lesdits pistons (24) vers l'avant et vers l'arrière ; lesdits moyens d'actionnement (27 ; 27a) étant raccordés de façon détachable auxdits pistons (24) ; et
- un cadre (13 ; 13a) supportant ledit moteur (29 ; 29a) et comprenant deux bras (18 ; 18a) dépassant le long d'axes horizontaux parallèles respectifs (11 ; 11a) et portant lesdits moyens d'actionnement (27 ; 27a) ;
la machine de coulée étant **caractérisée en ce que** ledit réservoir (20 ; 20a) et ledit ensemble de coulée (22 ; 22a) font partie d'un module (15 ; 15a) pouvant être retiré d'une seule pièce dudit cadre (13 ; 13a) ; le module (15 ; 15a) étant raccordé de façon détachable audit moteur (29 ; 29a), et comprenant un cadre supplémentaire (34 ; 34a) ayant deux appendices latéraux opposés (37 ; 37a) qui reposent en positions fixes sur des surfaces supérieures respectives (38 ; 38a) desdits bras (18 ; 18a).

2. Machine de coulée selon la revendication 1, **caractérisée en ce qu'**elle comprend un embrayage frontal (45 ; 45a) pour le raccordement dudit moteur (29 ; 29a) à un arbre d'entraînement faisant tourner ledit distributeur (25 ; 25a).

3. Machine de coulée selon la revendication 2, **caractérisée en ce que** ledit embrayage frontal (45a) peut être engagé de manière libérable par translation dudit module (15a) dans une direction (58) parallèle auxdits axes horizontaux (11a).

4. Machine de coulée selon la revendication 2 or 3, **caractérisée en ce que** ledit cadre (13 ; 13a) comprend une plaque verticale (17 ; 17a) ; ledit moteur (29 ; 29a) étant situé derrière ladite plaque verticale (17 ; 17a) ; et ledit embrayage frontal (45 ; 45a) étant situé devant ladite plaque verticale (17 ; 17a).

5. Machine de coulée selon la revendication 3, **caractérisée en ce que** lesdits bras (18a) ont des rails respectifs (39a) parallèles auxdits axes horizontaux (11a) ; et lesdits appendices latéraux (37a) ont des parties coulissantes (52) respectives qui entrent en prise avec lesdits rails (39a) et coulissent le long de ceux-ci.

6. Machine de coulée selon la revendication 3 ou 5, **caractérisée en ce qu'**elle comprend un actionneur (56) permettant de faire coulisser ledit module (15a) dans ladite direction (58) sur lesdites surfaces supérieures (38a).

7. Machine de coulée selon la revendication 6, **caractérisée en ce que** ledit actionneur (56) comprend :
- une tige (57) mobile dans ladite direction (58) ; et
- au moins une broche verticale (59), qui est fixée à l'extrémité de ladite tige (57), qui dépasse vers le haut, et qui entre en prise avec un trou correspondant (60) formé dans un appendice arrière (61) dudit cadre supplémentaire (34a).

8. Machine de coulée selon la revendication 7, **caractérisée en ce que** lesdits appendices latéraux (37a) et/ou ledit appendice arrière (61) font partie d'une plaque horizontale (42a) interposée entre ledit réservoir (20a) et ledit ensemble de coulée (22a).

9. Machine de coulée selon la revendication 8, **caractérisée en ce que** lesdits appendices latéraux (37a) et/ou ledit appendice arrière (61) font partie d'une plaque horizontale (42a) formée d'un seul tenant avec un bloc (23a) dudit ensemble de coulée (22a).

10. Machine de coulée selon l'une quelconque des revendications précédentes, **caractérisée en ce que** lesdits moyens d'actionnement (27 ; 27a) comprennent :
- au moins un coulisseau (31 ; 31a) monté sur l'un desdits bras (18 ; 18a) de façon à coulisser dans une direction horizontale perpendiculaire auxdits axes horizontaux (11 ; 11a) ;
- des moyens de retenue (63) qui fixent ledit coulisseau (31 ; 31a) de manière détachable aux extrémités desdits pistons (24a) ; et
- des moyens de transmission logés dans ledit bras (18 ; 18a) et permettant la transmission du mouvement d'un moteur supplémentaire (28) audit coulisseau (31 ; 31a).

11. Machine de coulée selon la revendication 10, **caractérisée en ce que** lesdits moyens de retenue (63) sont montés sur ledit coulisseau (31a) et sont actionnés de façon à entrer en prise avec lesdits pistons (24a) et/ou se détacher de ceux-ci.

12. Machine de coulée selon la revendication 11, **caractérisée en ce que** les extrémités desdits pistons (24a) sont fixées à une plaque d'ancrage (62) ; lesdits moyens de retenue comprenant au moins une mâchoire (65, 66) mobile de façon à entrer en prise avec ladite plaque d'ancrage (62) et/ou se détacher de celle-ci.

13. Procédé de retrait d'un module (15a) d'une machine de coulée selon l'une quelconque des revendications précédentes, le procédé comprenant les étapes consistant à :
- détacher lesdits pistons (24a) desdits moyens d'actionnement (27a) ;
- déplacer ledit module (15a) le long desdites surfaces supérieures (38a) dans une direction (58) parallèle auxdits axes horizontaux (11a) ;
- placer un berceau en dessous dudit module (15a) ;
- abaisser lesdits bras (18a) jusqu'à ce que ledit cadre supplémentaire (34a) vienne reposer sur ledit berceau et se détache desdits bras (18a) ; et
- retirer ledit berceau, avec le module (15a) reposant sur lui.
